# EUROPEAN PATENT APPLICATION

(11) **EP 0 965 269 A2**
(43) Date of publication of application: **22.12.1999**
(21) Application number: 99111591.6
(22) Date of filing: 15.06.1999
(51) Int. Cl.: A01N 37/44, A01N 37/36

(54) **Method for improving a soil nematode fauna and a soil microflora**

(30) Priority: 16.06.1998 JP 16839898; 07.09.1998 JP 25300198
(71) Applicant: HODOGAYA CHEMICAL CO LTD, Kawasaki-shi, Kanagawa 210 (JP); Hodogaya Agros Co., Ltd., Tokyo 103-0004 (JP)
(72) Inventor: Wakui, Akira, c/o Hodogaya Agros Co., Ltd., Tokyo 103-0004 (JP); Yoshida, Ruriko, c/o Hodogaya Agros Co., Ltd., Tokyo 103-0004 (JP); Kawada, Hiroshi, c/o Hodogaya Chemical Co., Ltd., Kawasaki-shi, Kanagawa 210 (JP)
(74) Representative: Wächtershäuser, Günter, Prof. Dr.

(57) **Abstract**

A method for improving a nematode fauna, which comprises applying a) methionine of the formula 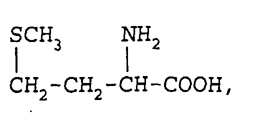 or 2-hydroxy-4-(methylthio)butyric acid of the formula 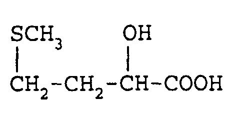 or its salt and b) at least one member selected from the group consisting of an inorganic or organic fertilizer, a pH-controlling agent and an oxygen-supplying agent, to soil.

## Description

The present invention relates to a technique of utilizing methionine to improve a nematode fauna living in soil thereby to reduce the density of plant-parasitic nematodes which bring about damage to plants. Further, the present invention relates to a method of using 2-hydroxy-4-(methylthio)butyric acid to reduce the density of harmful soil microbes or nematodes which bring about damage to plants.

Agricultural chemicals are used in many cases to control plant-parasitic nematodes or soil borne disease, which bring about serious damage to plants. In a case where agricultural chemicals can not be used, solarization or crop rotation from parasitism or propagation of pathogenic microbes or nematodes, is carried out.

Among agricultural chemicals, fumigants such as methyl bromide, chloropicrin, 1,3-dichloropropene, methyl isothiocyanate and its analogue dazomet, are excellent in controlling harmful soil microbes or nematodes. However, because of the phytotoxicity, it is not possible to plant crop plants immediately after the treatment. Further, as compared with usual agricultural chemicals, an extremely large amount is used, so that the load to the environment is large, and there is a worldwide tendency to gradually decrease such treatment. Other organic phosphorus type or carbamate type agricultural chemicals have merits such that their use is simple and phytotoxicity to crop plants is little. However, dispersibility in soil is poor, and they are inferior in the ability of controlling harmful soil microbes or nematodes. Further, they can not be used during the growing period of crop plants because of the toxicity and residue in the crop plants.

As a method for controlling harmful soil microbes or nematodes by means of other than agricultural chemicals, solarization is known. However, in such a method, it is difficult to stabilize the effects, since the temperature and the sunshine is varied uncertainty. Further, cropping can not be made for a long term, and this method is inferior from the utilization of a crop land. Crop rotation is a method for preventing damage by harmful soil microbes or nematodes, which has been used since long ago, but it is not necessarily suitable for modern agriculture where the economical efficiency is of importance. By another method of controlling damage by harmful soil microbes or nematodes by application of barnyard manure or the like, no adequate effect can be expected in a field where the harmful soil microbes or nematodes prevail. Even when the effects are obtained by application of a large amount, the nitrogen amount tends to be excessive, or the plants are likely to be damaged by an organic acid, etc. thereby generated. Accordingly, such a method can hardly be employed.

It is known that damage by nematode can be controlled by application of methionine to soil, as disclosed in NEMATOLOGICA 17 (1971) p. 495-500. However, its ability to control nematode is such that in a pot test, at least 300 mg (1,500 ppm) of methionine is required per 200 g of soil, and such application had to be very expensive. Besides, with a dose of at least 200 mg (1,000 ppm), it exhibited strong growth inhibition against potato. Accordingly, in a field test, by each plants application, the amount had to be reduced to 260 kg/ha. This method is intended to secure the amount of harvest by locally reducing the density of the nematodes. However, by this method, increase of nematodes can not be controlled at the portion not treated, whereby a large amount of nematodes will remain in the field at the time of harvesting. Accordingly, in order to secure constant production every year, it is desired to reduce the density of nematodes over the entire field.

It is disclosed that damage of crop plants by soil borne disease or nematodes can be controlled by application of an amino acid to soil, for example, in Ann. Rev. Phytpathol. 4 (1996) p. 349-368 and NEMATOLOGICA 17 (1971) p. 495-500. However, its amount is large, and it has been difficult to use such a method economically. Further, such a method has not practically been used for such a reason that the amount required to control the damage is not substantially different from the amount which creates phytotoxicity against crop plants.

Methionine is an amino acid which is widely present in organisms as a protein-constituting component or as a substrate for a methyl group-transition reaction. For a human being, it is an essential amino acid, and chemically synthesized methionine is used in a large amount as added to grain or animal feed. And it can be used as a pharmaceutical to be administered for a liver trouble or various toxicosis. As is described in about, it is a highly safe chemical substance.

The present inventors have conducted an extensive study on the influence of methionine over the plant-parasitic nematode and have found that by a combined use of a) methionine and a substance represented by the following b), the activities of a plant parasitic nematode can substantially be suppressed.

In the first aspect, the present invention provides a method for improving a nematode fauna, which comprises applying a) methionine of the formula 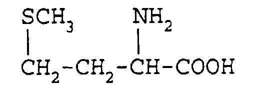 and b) at least one member selected from the group consisting of an inorganic or organic fertilizer, a pH-controlling agent and an oxygen supplying agent, to soil.

Further, the present invention provides a composition for improving a soil nematode fauna, which comprises a methionine of the formula 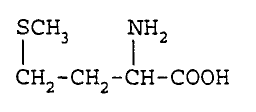 and b) at least one member selected from the group consisting of an inorganic or organic fertilizer, a pH-controlling agent, and an oxygen supplying agent.

Further, the present inventors have conducted an extensive study on the influence of an organic substance over harmful soil microbes or nematodes and have found that when 2-hydroxy-4-(methylthio)butyric acid (hereinafter referred to as HMTB) or its salt, is applied to soil, plant-parasitic nematodes separated from the soil decrease, and free living nematodes increase to enrich the soil microflora, and soil disease injury can be suppressed.

HMTB has a high water-solubility and is inexpensive, and when taken in by an animal, it will be converted efficiently to methionine and thus it is used in a large quantity worldwidely as a feed additive for domestic animals to supplement deficiency of methionine which is an essential amino acid.

It has not heretofore been known that damage to crop plants by harmful soil microbes or nematodes can be controlled by application of HMTB or its salt to the soil.

In the second aspect, the present invention provides a method for improving a soil microflora, which comprises applying HMTB i.e. 2-hydroxy-4-(methylthio)butyric acid of the formula 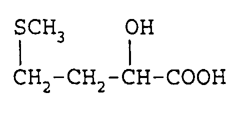 or its salt, to soil.

Now, the present invention will be described in detail with reference to the preferred embodiments.

Referring to the first aspect of the present invention, component b) is specifically an inorganic or organic fertilizer to be applied to an agricultural field, a substance to adjust pH and/or an oxidizing agent to supply oxygen. More specifically, as inorganic substances, ammonium sulfate, ammonium chloride, calcium phosphate, potassium chloride, potassium phosphate, sodium phosphate, quick lime, calcium carbonate, sodium hydrogencarbonate, sulfur, ammonium nitrate and calcium peroxide, may, for example, be mentioned. Most of these inorganic substances can be used as fertilizers of component b), but quick lime, calcium carbonate, sodium hydrogencarbonate and sulfur may be used mainly as substances to adjust the pH of soil. Other alkali metal compounds and ammonium compounds may be used in a suitable combination as a pH buffering agent. Further, calcium peroxide is an oxidizing agent to supply oxygen. Organic substances as component b) include organic fertilizers such as urea, fish powder or born powder, saccharides, proteins, lipids, organic acids, and industrial wastes containing them, as well as live-stock wastes including excretions and composts made thereof. Some of organic acids may be used in combination with the above-mentioned inorganic salts as a pH buffering agent. Methionine is a hydrophobic amino acid with a solubility of 34 g/ℓ. However, by increasing the solubility by mixing it with e.g. a pH buffering agent to depart from the isoelectric point, it is possible to reduce the amount of watering during the application of methionine or to increase the transferability during the watering thereby to improve the effects against nematode living deep in the soil.

The dose of methionine is at most 60 kg/10a (600 ppm in a soil depth of 10 cm) at which no phytotoxicity to crop plants will result even when treatment is carried out over the entire area of the field, and it is at least 20 kg/10a (200 ppm in a soil depth of 10 cm) at which the effect for suppressing the nematode density appears distinctly. On the other hand, the amounts of various components to be used together must be at most equal to the amounts of the fertilizers which are usually applied to crop plants. When methionine is mixed with these components b), methionine is preferably in a high concentration to reduce the labor for application to the field and to secure the amount of methionine to obtain adequate effects, and its content is usually from 10 to 90% by weight, preferably from 50 to 90% by weight.

Further, in order to further improve the effect of methionine, it is preferred to water or to secure the temperature by covering to activate the activities of soil microbes.

It has been found that application of such a composition containing methionine gives little influence over common environmental organisms and may even serve to increase the density of free living nematodes in the soil. This indicates that the activities of microorganisms in the soil are promoted. Further, by the combined use of components b), it has been made to substantially reduce the dose of methionine over the dose which used to be known, whereby the possibility of the phytotoxicity to crop plants can be reduced, and it will be possible to control nematodes during the growing period of crop plants, which used to be impossible.

Now, referring to the second aspect of the present invention, the cation constituting the salt of HMTB is preferably an alkali metal such as sodium or potassium, an alkaline earth metal such as calcium or magnesium, or ammonium cation or urea.

The dose of HMTB or its salt is at most 60 kg/10a at which no phytotoxicity to crop plants will result and at least 20 kg/10a at which the effect for suppressing the damage by harmful soil microbes or nematodes will appear distinctly.

HMTB may be used in admixture with a fertilizer or an agricultural chemical which is commonly used in the agricultural field.

Within the above range, HMTB or its salt will present no influence over the growth of crop plants, and it has high solubility in water and can readily be dissolved in water for application, whereby it will be possible to control harmful soil microbes or nematodes during the growing period of crop plants, which used to be difficult.

Further, the effects of HMTB may be improved by activating the activities of microbes by watering or by securing the temperature by covering.

Now, the present invention will be described in further detail with reference to Examples. However, it should be understood that the present invention is by no means restricted to such specific Examples.

### EXAMPLE 1: Influences of methionine and additives

To 1 kg of soil infested with root-knot nematodes, methionine and various other materials as identified below, were added and thoroughly mixed. After mixing, the mixture was put into a 1/10,000 are pot, covered with a vinyl mulch and left to stand for a week in an artificial climate chamber at 25°C. Then, it was mixed again and nematodes were separated by a Baermann funnel method. Each treatment was repeated twice, and the average result is shown in Table 1. As a control reagent, dazomet was used, and the additives are identified by the types of additives in the Table.

**Table 1**

| Example 1 | Types of additives | Nematode soil | density/20 g |
|---|---|---|---|
| | | Root-knot nematodes | Free living nematodes |
| 1 (control) | Nil | 339±10 | 1740±740 |
| 2 (control) | b | 348±84 | 2110±170 |
| 3 (control) | b,c | 298±182 | 2350±50 |
| 4 (invention) | a | 99±16 | 2930±1320 |
| 5 (invention) | a,b | 17±21 | 4290±1210 |
| 6 (invention) | a,b,c | 3±3 | 3060±430 |
| 7 (invention) | a,d | 1±1 | 1900±210 |
| 8 (invention) | a,b,e | 7±4 | 3560±1230 |
| 9 (invention) | a,b,f | 5±6 | 2410±150 |
| 10 (control) | b,g | 1±1 | 24±3 |

### Types of additives

- a:: 0.4 g of methionine
- b:: 3 g of a chemical fertilizer comprising 8% of each of nitrogen, phosphoric acid and potassium
- c:: 30 g of cattle manure compost
- d:: 3 g of peptone
- e:: 0.15 g of citric acid and 0.05 g of urea
- f:: 2 g of 50% calcium peroxide
- g:: 0.2 g of dazomet

One week later, tomato seedlings were planted in the soil (two seedlings per pot) and cultivated at 25°C for 1 month, whereupon the leaf and stem weight was measured, and root-knots formed on the root were evaluated by the parasitic degrees as identified below. With dazomet, the seedlings were withered, and one week later, tomato seedlings were planted again. Each treatment was repeated twice, and the average result of four seedlings, is shown in Table 2.

**Table 2**

| Example 1 | Types of additives | Leaf and stem weight (g/seedling) | Root-knot parasitic degree |
|---|---|---|---|
| 1 (control) | Nil | 10.8±3.7 | 4.00±0.00 |
| 2 (control) | b | 14.4±1.9 | 4.00±0.00 |
| 3 (control) | b,c | 15.0±2.5 | 4.00±0.00 |
| 4 (invention) | a | 16.1±3.3 | 2.88±0.25 |
| 5 (invention) | a,b | 17.9±1.5 | 1.88±0.25 |
| 6 (invention) | a,b,c | 18.8±2.1 | 1.38±0.48 |
| 7 (invention) | a,d | 20.6±4.3 | 0.75±0.50 |
| 8 (invention) | a,b,e | 18.4±4.9 | 1.00±0.00 |
| 9 (invention) | a,b,f | 18.1±1.3 | 1.13±0.48 |
| 10 (control) | b,g | 7.9±1.9 | 0.63±0.25 |

### Root-knot parasitic degrees

- 0:: No root-knot was observed.
- 0.5:: Root-knots are at most 12.5% of the root system.
- 1:: Root-knots are more than 12.5% and at most 25% of the root system.
- 1.5:: Root-knots are more than 25% and at most 37.5% of the root system.
- 2:: Root-knots are more than 37.5% and at most 50% of the root system.
- 2.5:: Root-knots are more than 50% and at most 62.5% of the root system.
- 3:: Root-knots are more than 62.5% and at most 75% of the root system.
- 3.5:: Root-knots are more than 75% and at most 87.5% of the root system.
- 4:: Root-knots are more than 87.5% of the root system.

### EXAMPLE 2 Effect of methionine by watering

3 g of the chemical fertilizer used in Example 1, was mixed to 1 kg of soil having an initial density of root-knot nematodes of 459±235/20 g, and the mixture was put into a 1/10,000 are pot. Tomato seedlings were planted (two seedlings per pot) and cultivated at 25°C for 1 week. Then, 0.4 g of methionine or 0.5 g of a methionine mixture containing 20% of a phosphate buffer having a pH of 7, was dissolved in 50 ml of water, and applied. Then, the seedlings were cultivated for 3 weeks in an artificial climate chamber at 25°C, whereupon the leaf and stem weight and the root-knot degree formed on the root, were evaluated in the same manner as in Example 1. Each treatment was repeated twice, and the average result is shown in Table 3.

**Table 3**

| Example 2 | Types of additives | Leaf and stem weight (g/seedling) | Root-knot parasitic degree |
|---|---|---|---|
| 1 (control) | Nil | 7.6±4.0 | 4.00±0.00 |
| 2 (invention) | Only methionine | 12.6±5.1 | 2.75±0.29 |
| 3 (invention) | A buffer was also used. | 15.0±2.5 | 1.88±0.48 |

### EXAMPLE 3 Influence of HMTB and additives

To 1 kg of soil infested with root-knot nematodes, spores of radish yellows (Fusarium oxysporum f.sp. raphani) were added in an amount of 1×10⁴ spores/g, and HMTB or its salt in an amount of 0.4 g, and 3 g of a chemical fertilizer containing 7.5% of each of nitrogen, phosphoric acid and potassium, were added and thoroughly mixed thereto. After mixing, the mixture was packed into a polyethylene bag and left for 1 week in an artificial climate chamber at 25°C, and after mixing it again, nematodes were separated by a Baermann funnel method. As a control agent for comparison, 0.2 g of dazomet was used. Each treatment was repeated twice, and the average result is shown in Table 4.

**Table 4**

| Additive | Nematode density/20 g soil | |
|---|---|---|
| | Root-knot nematodes | Free living nematodes |
| 1. Nil | 244±34 | 1630±150 |
| 2. HMTB | 5±3 | 2130±280 |
| 3. HMTB urea salt | 0±0 | 1860±20 |
| 4. HMTB Ca salt | 0±0 | 1750±90 |
| 5. Dazomet | 0±0 | 4±3 |

Further, the soil was packed into a polyethylene pot having a diameter of 10.5 cm, and tomato seedlings were planted (two seedlings per pot). They were cultivated at 25°C for 1 month, whereupon the leaf and stem weight, and root-knots formed in the root were evaluated by the parasitic degree as identified below. The test on radish yellows was carried out in such a manner that 10 radish seeds were sown in a polyethylene pot having a diameter of 7.5 cm, and one week later, thinning was carried out to 7 seedlings per pot. Then, upon expiration of six weeks after seeding, the number of diseased seedlings was counted.

In the dazomet treated section, the tomato was withered due to the phytotoxicity, and one week later, seedlings were planted again. With respect to the radish, no germination was observed, and one week later, the soil was again mixed and further left to stand for one week, whereupon seeding was carried out.

The test on nematode was repeated twice, and the average result of four seedlings is shown in Table 5. The test on radish yellows was not repeated, and the number of diseased seedlings is shown in Table 6.

**Table 5**

| Additive | Leaf and stem weight (g/seedling) | Root-knot parasitic degree |
|---|---|---|
| 1. Nil | 4.3±0.4 | 4.00±0.00 |
| 2. HMTB | 5.5±0.7 | 2.25±0.35 |
| 3. HMTB urea salt | 6.0±0.7 | 0.75±0.71 |
| 4. HMTB Ca salt | 6.0±1.1 | 1.00±0.00 |
| 5. Dazomet | 3.8±1.1 | 0.50±0.71 |

### Nematode parasitic degrees in Table 5

- 0:: No root-knot was observed.
- 0.5:: Root-knots are at most 12.5% of the root system.
- 1:: Root-knots are more than 12.5% and at most 25% of the root system.
- 1.5:: Root-knots are more than 25% and at most 37.5% of the root system.
- 2:: Root-knots are more than 37.5% and at most 50% of the root system.
- 2.5:: Root-knots are more than 50% and at most 62.5% of the root system.
- 3:: Root-knots are more than 62.5% and at most 75% of the root system.
- 3.5:: Root-knots are more than 75% and at most 87.5% of the root system.
- 4:: Root-knots are more than 87.5% of the root system.

**Table 6**

| Additive | Number of diseased/7 seedlings |
|---|---|
| 1. Nil | 5 |
| 2. HMTB | 1 |
| 3. HMTB urea salt | 1 |
| 4. HMTB Ca salt | 0 |
| 5. Dazomet | 0 |

As described in the foregoing, according to the first aspect of the present invention, crop plants can be protected from nematode without bringing about phytotoxicity to crop plants, by means of methionine which is commonly present in living organisms and which can readily be extinguished by living organisms in a normal environment.

According to the second aspect of the present invention, crop plants can be protected from harmful soil microbes or nematodes without bringing about phytotoxicity to crop plants by means of 2-hydroxy-4-(methylthio)butyric acid or its salt, which can readily be converted to methionine by living organisms and which can be readily extinguished by living organisms in a normal environment.

## Claims

1. A method for improving a nematode fauna, which comprises applying a) methionine of the formula 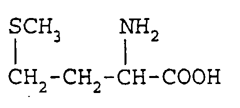 and b) at least one member selected from the group consisting of an inorganic or organic fertilizer, a pH-controlling agent and an oxygen-supplying agent, to soil.

2. The method according to Claim 1, wherein component b) is at least one member selected from the group consisting of ammonium sulfate, ammonium chloride, calcium phosphate, calcium chloride, potassium phosphate, sodium phosphate, quick lime, potassium carbonate, sodium hydrogencarbonate, sulfur, ammonium nitrate, calcium peroxide, and organic fertilizers, saccharides, proteins, lipids, organic acids, industrial wastes containing them, live-stock wastes and composts made of live-stock wastes.

3. The method according to Claim 1 or 2, wherein the application is made so that the dose of methionine is from 20 kg/10a to 60 kg/10a.

4. A composition for improving a soil nematode fauna, which comprises a) methionine of the formula 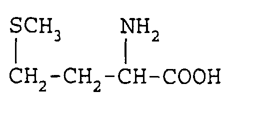 and b) at least one member selected from the group consisting of an inorganic or organic fertilizer, a pH-controlling agent, and an oxygen supplying agent.

5. The composition according to Claim 4, wherein component b) is at least one member selected from the group consisting of ammonium sulfate, ammonium chloride, calcium phosphate, calcium chloride, potassium phosphate, sodium phosphate, quick lime, potassium carbonate, sodium hydrogencarbonate, sulfur, ammonium nitrate, calcium peroxide, and organic fertilizers, saccharides, proteins, lipids, organic acids, industrial wastes containing them, live-stock wastes and composts made of live-stock wastes.

6. The composition according to Claim 4 or 5, wherein the methionine is in an amount of from 10 to 90% by weight, the rest being component b).

7. A method for improving a soil nematode fauna or a soil microflora, which comprises applying 2-hydroxy-4-(methylthio)butyric acid of the formula 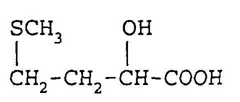 or its salt, to soil.

8. The method according to Claim 7, wherein the application is made so that the dose of the butyric acid or its salt is from 20 kg/10a to 60 kg/10a.
